# EUROPÄISCHE PATENTSCHRIFT

(11) **EP 2 054 649 B1**
(45) Veröffentlichungstag und Bekanntmachung des Hinweises auf die Patenterteilung: **22.01.2014**
(21) Anmeldenummer: 07785550.0
(22) Anmeldetag: 25.06.2007
(51) Int. Cl.: F16K 31/52, F16K 1/16, F16K 31/50

(54) **ABSPERRARMATUR**
SHUT-OFF DEVICE
ARMATURE DE FERMETURE

(30) Priorität: 29.06.2006 DE 102006030027
(43) Veröffentlichungstag der Anmeldung: 06.05.2009
(73) Patentinhaber: Friatec Aktiengesellschaft, 68229 Mannheim (DE)
(72) Erfinder: SCHWARZ, Simon, 66994 Dahn (DE); ROTHERMEL, Alexander, 68239 Mannheim (DE); MAIER, Fabian, 67368 Westheim (DE); ELSASSER, Dirk, 68259 Mannheim (DE); GEHR, Heiko, 76829 Landau (DE); SICHLER, Wolfgang, 68239 Mannheim (DE); SCHMITT, Harald, 68309 Mannheim (DE); SCHNEIDER, Michael, 68309 Mannheim (DE); SCHMICH, Ralf, 69124 Heidelberg (DE)
(74) Vertreter: Tönhardt, Marion
(86) Internationale Anmeldenummer: PCT/DE2007/001117
(87) Internationale Veröffentlichungsnummer: WO 2008/000233

(56) Entgegenhaltungen:
- EP-A- 0 493 029
- WO-A-03/100302
- DE-C- 597
- US-A- 3 119 594
- US-A- 3 632 080
- US-A- 3 876 179

## Beschreibung

Die Erfindung betrifft eine Absperrarmatur, mit einem Gehäuse, das druckdicht mit einer anschließenden Rohrleitung zu verbinden ist, wobei ein Rohrdurchgang in dem Gehäuse für ein durch die Rohrleitung strömendes Medium definiert ist, und mit mindestens einem Abschlußkörper, der über einen Anlenkmechanismus mit einem vertikal zur Strömungsrichtung bewegbaren Stellantrieb aus einer Offenstellung in eine Schließstellung bewegbar ist, wobei der mindestens eine Abschlußkörper in Schließstellung mit seiner Dichtkontur radial dichtend am Rohrdurchgang anliegt. Der Anlenkmechanismus weist einen Lagerkörper auf, wobei mindestens eine Abschlußkörper lediglich an den Lagerkörper verschwenkbar angebracht ist, und wobei der Lagerkörper im Gehäuse geführt ist.

Solche Absperrarmaturen sind aus der WO 2003/100302 A1 bekannt. Sie bestehen in der Regel aus Metall oder Kunststoff, wobei Armaturen aus thermoplastischen Werkstoffen den Vorteil haben, daß nicht nur die einzelnen Gehäuseteile mittels bekannter Schweißverfahren stoffschlüssig gefügt werden können, es kann auch auf ebenso einfache Weise eine Anbindung an ein bestehendes PE-Rohrnetz erfolgen. Bei den in der WO 2003/100302 A1 offenbarten Absperrarmaturen ist besonders vorteilhaft, daß diese mit einem Reinigungsmolch durchfahren werden können. Dazu ist der mindestens eine Abschlußkörper so gestaltet, daß er in seiner Offenstellung außerhalb des Rohrdurchganges liegt.

Im Betriebszustand entstehen in Strömungsrichtung des Mediums Axialkräfte, die, wenn nicht vom Abschlußkörper, dann vom Stellantrieb aufgenommen werden müssen. Dabei handelt es sich einerseits um eine statische Belastung im geschlossenen Zustand der Armatur, wo einseitig wirkende Druckkräfte auftreten, andererseits aber auch um dynamische Belastungen im geöffneten Zustand bei einer Zwischenstellung des Abschlußkörpers oder der Abschlußkörper, insbesondere kurz vor dem Schließen der Armatur.

Daher ist in der DE 11 09 972 B vorgeschlagen worden, den Anlenkmechanismus parallel zur Bewegungsrichtung des Stellantriebes zu führen. Die Führung des Abschlußkörpers beschreibt die US 3 119 594 A.

Die DE 597C betrifft ein Doppelventil, bei dem ein gehäuseseitig gelagerter Abschlusskörper über einen Stelltrieb zwischen einer Offen- und einer Schließstellung bewegbar ist, und wobei eine sowohl mit den Schließkörpern als auch dem Stelltrieb in Verbindung stehende Mutter über Führungsarme verfügt, welche in gehäuseseitige Nuten eingreifen und somit ein Verdrehen der Mutter A entlang der Stelltriebachse verhindert wird.

Die US 3,119,594 sowie US 3,632,080 offenbaren jeweils eine Absperrarmatur, bei der der Abschlusskörper sowohl gehäuseseitig als auch über eine Achse, welche in ein Langloch des Abschlusskörpers eingreift, gelagert ist.

Es ist die Aufgabe der Erfindung, eine Absperrarmatur zur Verfügung zu stellen, bei der die oben beschriebenen Axialkräfte auf einfache Weise innerhalb der Armatur noch besser neutralisiert werden.

Diese Aufgabe wird bei einer Absperrarmatur der eingangs genannten Gattung dadurch gelöst, daß der Lagerkörper zwei diametral gegenüberstehende Rippen aufweist und in der Wand des Gehäuses oder in einer das Gehäuse zumindest teilweise auskleidenden Einlage entsprechend zwei Nuten ausgebildet sind, wobei die Rippen ein sich quer zur Strömungsrichtung des Mediums erstreckendes Joch bilden. Dies bedeutet, daß die Querbelastung auf den Stellantrieb unter einseitiger Belastung abgefangen und die Betriebssicherheit der Armatur auch bei Zwischenstellungen des Abschlußkörpers gewährleistet ist. Es bildet der Lagerkörper ein Querjoch, mit dem die Axialkräfte gleichmäßig in das Gehäuse weitergeleitet werden können.

Das Gehäuse weist vorteilhaft eine Einlage (Insert) auf, in der die mindestens eine Nut ausgebildet ist, so daß eine problemlose Vorfertigung möglich wird.

Der Lagerkörper weist nach einer bevorzugten Ausgestaltung einen Träger auf, von dem die mindestens eine Rippe hervorsteht, wobei der Träger die Aufhängung für den mindestens einen Abschlußkörper umgibt. Das heißt, daß der Lagerkörper zweiteilig ausgebildet sein kann, wobei weiter bevorzugt die Aufhängung ein Außengewinde zum Einschrauben in den Antrieb aufweist. Die zweiteilige Ausgestaltung macht es möglich, daß die durch das strömende Medium hervorgegangenen Kräfte optimal aufgefangen werden.

Weiter vorteilhaft ist der mindestens eine Abschlußkörper als Klappe ausgebildet; die sich bei im wesentlichen axialer Druckbeaufschlagung durch das strömende Medium an ihrer Dichtkontur aufweitet. Der Abschlußkörper bzw. die Klappe wird mit verformt, wobei diese Verformung zusätzlich die Dichtwirkung des an der Dichtkontur vorzugsweise angebrachten Dichtelementes durch erhöhte Verpressung unterstützt. Auch können dadurch Toleranzen aufgrund der Dehnung des Gehäuses aufgefangen werden; es handelt sich erfindungsgemäß um eine selbstnachdichtende Klappe.

Im folgenden soll die Erfindung lediglich beispielhaft anhand der beigefügten Zeichnung näher erläutert werden. Es zeigt:
- Figur 1: eine Längsschnittansicht durch eine Ausführungsform einer Absperrarmatur gemäß der vorliegenden Erfindung;
- Figur 2: eine Schnittansicht entlang der Linie B-B aus Figur 1;
- Figur 3: eine perspektivische Ansicht eines Stellantriebs mit einem Lagerkörper gemäß der vorliegenden Erfindung; und
- Figur 4: eine Ansicht der Absperrarmatur, aus der die Lage der Nut besonders deutlich hervorgeht; und

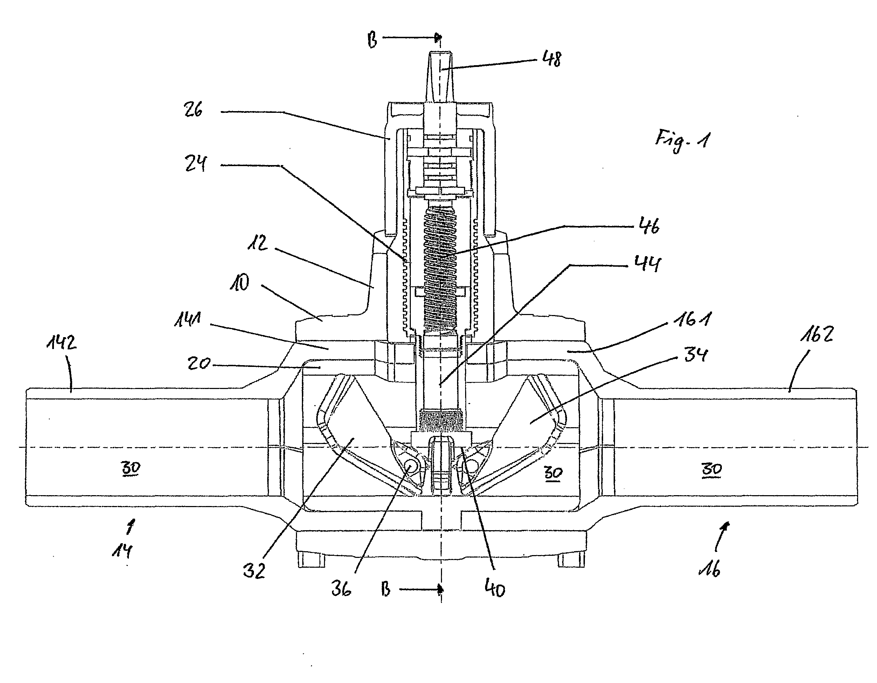

Die in Figur 1 dargestellte Absperrarmatur weist ein Gehäuse 100 auf, bei dem innerhalb eines Außengehäuses 10 zwei gegenüberstehende Spitzenden 14, 16 angeordnet sind, die Einsteckenden 141 und 161 jedes Spitzendes 14, 16 befindet sich dabei vollständig im Außengehäuse, während die freiliegenden Enden 142, 162 zum Anschluß an bestehende Rohrleitungen gedacht sind. Innerhalb des Gehäuses 100 ist weiterhin eine Einlage (Insert) 20 vorgesehen, welches das Gehäuse 100 im Bereich der Einsteckenden 141, 161 auskleidet. Verschlossen werden kann der Rohrdurchgang 30 mittels zweier Klappen 32, 34, die über einen Stellantrieb, der im folgenden noch näher beschrieben wird, zwischen einer Offenstellung und einer Schließstellung verfahren werden können. Die Klappen 32, 34 sind dabei über einen Anlenkmechanismus 36 an einem Lagerkörper 40 angelenkt, der wiederum den Antrieb 44 für die Verfahrbarkeit der Klappen 32, 34 aus der Offen- in die Schließstellung und zurück trägt. Die Axialbewegung des Antriebes 44 erfolgt durch die Drehbewegung der Spindel 46, welche über den Antriebsvierkant 48 eingeleitet wird. Die erforderliche Umdrehungszahl zum Öffnen und Schließen der Armatur wird über die Steigung der Spindel 46 und den erforderlichen Hub zum Betätigen der Armatur bestimmt. Der Stellantrieb aus Antrieb 44, Spindel 46 und Antriebsvierkant 48 ist auf übliche Weise durch einen Abgang 12 aus dem Gehäuse 100 herausgeführt.

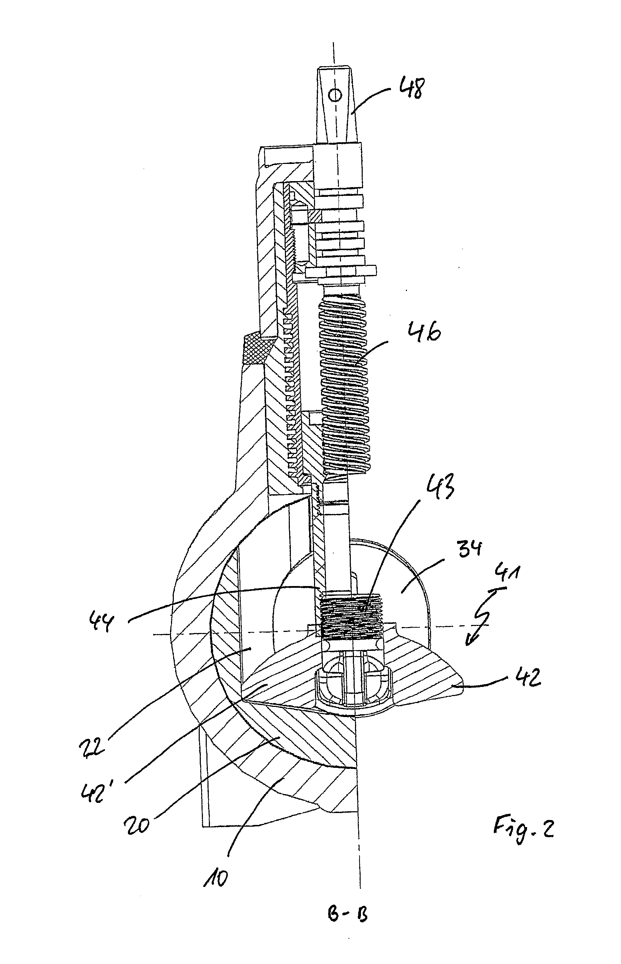

Figur 2 ist eine teilweise weggebrochene Schnittansicht entlang der Linie B-B aus Figur 1. Der Lagerkörper 40 für die Klappen, von denen hier nur eine 34 zu sehen ist, weist zwei Rippen 42, 42' auf, die einander in bezug auf die Stellantriebsachse diametral gegenüberstehen und somit ein Querjoch bilden. Jede Rippe ist in einer Nut 22 geführt, die hier in der Einlage 20 ausgebildet ist, aber auch direkt in der Gehäusewand vorgesehen sein kann. Die Nuten, hier ist nur die Nut 22 zu sehen, erstrecken sich parallel zur Stellantriebsachse, so daß Kräfte, die sich durch das durch die Armatur strömende Medium ergeben, aufgenommen werden können. Der Lagerkörper 40 ist zweiteilig ausgestaltet und weist einen Träger 41 auf, an dem die Rippen 42, 42' bevorzugt einstückig angebracht sind. Der Träger 41 umgibt dabei die Aufhängung 43 für die Abschlußkörper 32, 34, die hier als Außengewinde ausgestaltet ist, welches in den Antrieb 44 eingeschraubt wird.

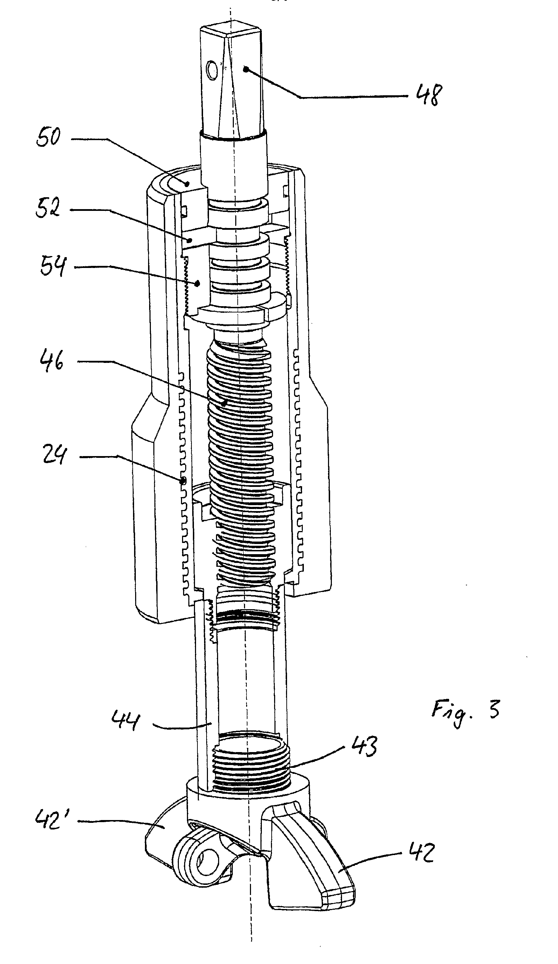

Figur 3 zeigt die Situation ähnlich in perspektivischer Ansicht. Aus Gründen der Klarheit sind die Klappen in dieser Darstellung weggelassen. Die auf dem Lagerkörper 40 ausgebildete Rippe 42 ist hier mit V-förmiger Außenkontur dargestellt, andere Formgebungen sind jedoch möglich. Der Figur 3 sind auch weitere Einzelheiten über den Stellantrieb zu entnehmen. Die Spindel 46 befindet sich dabei innerhalb des Doms 24, der aus Metall besteht und mit einem thermoplastischen Kunststoff, beispielsweise Polyethylen umspritzt ist. Die Lagerung der Spindel 46 erfolgt über eine Führungsscheibe 52, die im oberen Teil des Doms 24 nahe dem Antriebsvierkant 48 angeordnet ist. Die Führung 56 des Antriebs 44 geschieht durch die Passung in der Hülse 24, wobei die Verdrehsicherung durch den in den Nuten 22 (Figur 2) geführten Lagerkörper 40 mit seinen Rippen 42, 42'gewährleistet ist. Der obere und der untere Anschlag 60, 62 sind metallisch. Der obere Anschlag 60 wird durch einen Anschlagring 54, der untere Anschlag 62 durch den entsprechenden ausgebildeten Bodenbereich des Doms 24 realisiert. Der Dom 24 ist zum Antriebsvierkant 48 hin mit einer metallischen Abdichtung 50 verschlossen.

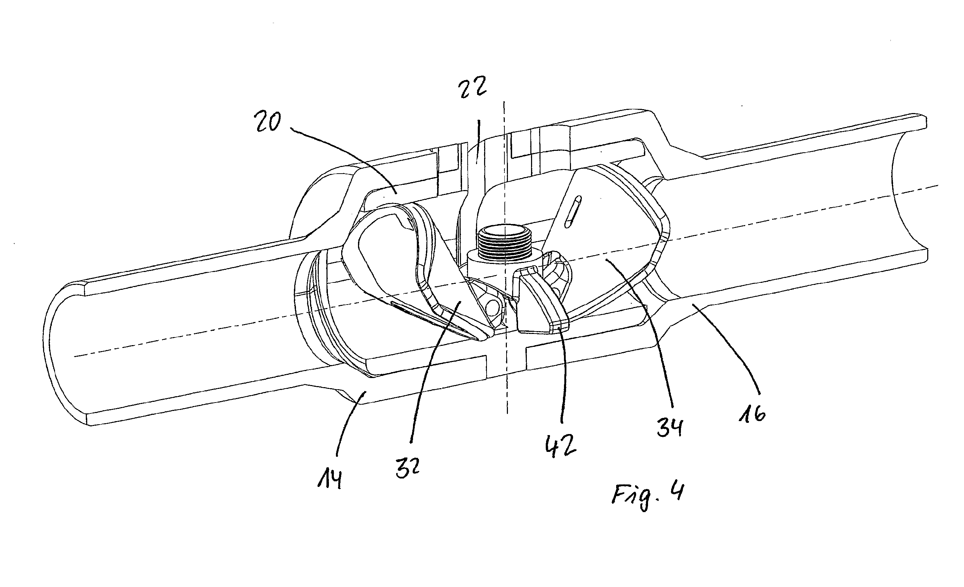

Figur 4 zeigt eine Schnittansicht durch die Armatur, wobei Außengehäuse und der Stellantrieb nicht dargestellt ist. Die am Anlenkmechanismus 36 angelenkten Klappen 32, 34 befinden sich in ihrer Schließstellung. Bei entsprechender Wahl der Dicke der Klappen 32, 34 verformen diese sich bei Kraftaufnahme, wobei je höher die Drücke sind, um so höher auch die Verformung ist. Diese Verformung unterstützt zusätzlich die Dichtwirkung eines auf dem Umfang der Klappe 32, 34 angebrachten Dichtelementes durch die erhöhte Verpressung. Des weiteren können dadurch Toleranzen aufgrund der Dehnung des Gehäuses 100 aufgefangen werden. Die weitere Kraftaufnahme geschieht, wie schon geschildert, über die in den Nuten 22 der Einlage 20 geführten Rippen 42 am Lagerkörper 40.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Absperrarmatur, mit einem Gehäuse (100), das druckdicht mit einer anschließenden Rohrleitung zu verbinden ist, wobei ein Rohrdurchgang (30) in dem Gehäuse (100) für ein durch die Rohrleitung strömendes Medium definiert ist, und mit mindestens einem Abschlusskörper (32, 34), der über einen Anlenkmechanismus (36, 40) mit einem vertikal zur Strömungsrichtung bewegbaren Stellantrieb (44, 46, 48) aus einer Offenstellung in eine Schließstellung, in der der mindestens eine Abschlusskörper (32, 34) mit seiner Dichtkontur radial dichtend am Rohrdurchgang anliegt, bewegbar ist, wobei der Anlenkmechanismus (36, 40) parallel zur Bewegungsrichtung des Stellantriebes (44, 46, 48) geführt ist und einen Lagerkörper (40) aufweist, wobei der mindestens eine Abschlusskörper (32, 34) lediglich an dem Lagerkörper (40) verschwenkbar angebracht ist,
**dadurch gekennzeichnet, dass** der Lagerkörper (40) zwei diametral gegenüberstehende Rippen (42, 42') aufweist und in der Wand des Gehäuses (100) oder in einer das Gehäuse (1200) zumindest teilweise auskleidenden Einlage (20) entsprechend zwei Nuten (22) ausgebildet sind, wobei die Rippen (42) ein sich quer zur Strömungsrichtung des Mediums erstreckendes Joch bilden.

2. Absperrarmatur nach Anspruch 1, **dadurch gekennzeichnet, dass** der Lagerkörper (40) einen Träger (41) aufweist, von dem die Rippen (42, 42') hervorsteht, wobei der Träger (41) die Aufhängung (43) für den mindestens einen Abschlusskörper (32, 34) umgibt.

3. Absperrarmatur nach Anspruch 2, **dadurch gekennzeichnet, dass** die Aufhängung (43) ein Außengewinde zum Einschrauben in den Antrieb (44) aufweist.

4. Absperrarmatur nach einem der Ansprüche 1 bis 3, **dadurch gekennzeichnet, dass** der mindestens eine Abschlusskörper (32, 34) als Klappe ausgebildet ist.

5. Absperrarmatur nach einem der Ansprüche 1 bis 4, **dadurch gekennzeichnet, dass** der mindestens eine Abschlusskörper (32, 34) sich bei im wesentlichen axialer Druckbeaufschlagung durch das strömende Medium an seiner Dichtkontur aufweitet.

6. Absperrarmatur nach einem der Ansprüche 1 bis 5, **dadurch gekennzeichnet, dass** an der Dichtkontur des mindestens einen Abschlusskörpers (32, 34) ein Dichtelement angebracht ist.

## Claims

1. A shut-off device comprising a housing (100) which is to be connected to an adjacent conduit in a pressure-tight manner, wherein a tubular passage (30) is defined in the housing (100) for a medium flowing through the conduit, and comprising at least one sealing body (32, 34) which can be displaced by an articulated mechanism (36, 40) by means of an adjusting drive (44, 46, 48) that can be moved vertically in relation to the direction of flow, from an open position into a closed position in which the sealing contour of the at least one sealing body (32, 34) comes into contact with the tubular passage in a radially sealing manner, wherein, the articulated mechanism (36, 40) is guided parallel to the direction of displacement of the adjusting drive (44, 46, 48) and comprises a bearing body (40) to which the at least one sealing body (32, 34) is pivotably applied,
**characterized in that**, the bearing body (40) comprises two diametrically opposed ribs (42, 42') and in the wall of the housing (100) or in an insert (20) at least partially lining the housing (100) correspondingly two grooves (22) are formed whereby the ribs (42) form a span extending transversally to the direction of flow of the medium.

2. The shut-off device according to claim 1, **characterized in that** the bearing body (40) is fitted with a carrier (41) from which the ribs (42, 42') protrude, wherein the carrier (41) surrounds the mounting (43) for the at least one sealing body (32, 34).

3. The shut-off device according to claim 2, **characterized in that** the mounting (43) is fitted with an exterior thread for screwing it into the drive (44).

4. The shut-off device according to any of claims 1 to 3, **characterized in that** the at least one sealing body (32, 34) is shaped as a flap.

5. The shut-off device according to any of claims 1 to 4, **characterized in that** the sealing contour of the at least one sealing body (32, 34) expands during substantial axial pressure caused by the flowing medium.

6. The shut-off device according to any of claims 1 to 5, **characterized in that** a sealing element is fitted on the sealing contour of the at least one sealing body (32, 34).

## Revendications

1. Robinet d'arrêt, comportant un carter (100) destiné à être relié de manière étanche à la pression à une conduite tubulaire à raccorder, un passage tubulaire (30) étant défini dans le carter (100) pour un fluide circulant à travers la conduite tubulaire, et comportant au moins un corps de fermeture (32, 34) qui, par l'intermédiaire d'un mécanisme d'articulation (36, 40), peut être déplacé avec un mécanisme de commande (44, 46, 48), mobile verticalement par rapport au sens du flux, hors d'une position d'ouverture vers une position de fermeture, dans laquelle ledit au moins un corps de fermeture (32, 34) est en appui étanche avec son contour d'étanchéité radialement contre le passage tubulaire, ledit mécanisme d'articulation (36, 40) étant guidé parallèlement au sens de déplacement du mécanisme de commande (44, 46, 48) et comportant un palier (40), ledit au moins un corps de fermeture (32, 34) étant monté pivotant contre le palier (40) uniquement par l'intermédiaire du mécanisme d'articulation (36), **caractérisé en ce que** ledit palier (40) comporte deux ailettes (42, 42') diamétralement opposées, et deux rainures (22) étant réalisées de manière concordante dans la paroi du carter (100) ou dans un insert (20) revêtant au moins partiellement le carter (1200), lesdites ailettes (42) formant une pale qui s'étend transversalement au sens de flux du fluide.

2. Robinet d'arrêt selon la revendication 1, **caractérisé en ce que** le palier (40) comporte un support (41) sur lequel les ailettes (42, 42') s'avancent en saillie, ledit support (41) entourant la suspension (43) pour ledit au moins un corps de fermeture (32, 34).

3. Robinet d'arrêt selon la revendication 2, **caractérisé en ce que** la suspension (43) comporte un filetage extérieur permettant de la visser dans le mécanisme de commande (44).

4. Robinet d'arrêt selon l'une quelconque des revendications 1 à 3, **caractérisé en ce que** ledit au moins un corps de fermeture (32, 34) est réalisé sous la forme de clapet.

5. Robinet d'arrêt selon l'une quelconque des revendications 1 à 4, **caractérisé en ce que** ledit au moins un corps de fermeture (32, 34) s'élargit sous l'effet d'une sollicitation de pression sensiblement axiale exercée par le fluide circulant contre son contour d'étanchéité.

6. Robinet d'arrêt selon l'une quelconque des revendications 1 à 5, **caractérisé en ce qu'**un élément d'étanchéité est posé sur le contour d'étanchéité dudit au moins un corps de fermeture (32, 34).
